# EUROPEAN PATENT APPLICATION

(11) **EP 2 712 068 A1**
(43) Date of publication of application: **26.03.2014**
(21) Application number: 11865490.4
(22) Date of filing: 18.05.2011
(51) Int. Cl.: H02K 15/02, H02K 16/00

(54) **METHOD FOR MANUFACTURING DOUBLE-AXIAL PARALLEL MOTOR AND COVER ASSEMBLY JIG**

(71) Applicant: TOYOTA JIDOSHA KABUSHIKI KAISHA, Toyota-shi, Aichi-ken, 471-8571 (JP)
(72) Inventor: SASAKI Masahiro, Toyota-shi Aichi 471-8571 (JP)
(74) Representative: Albutt, Anthony John
(86) International application number: PCT/JP2011/061360
(87) International publication number: WO 2012/157083

(57) **Abstract**

In a rotor assembly process for assembling rotors (50) to a case main body (20) where stators (40) are fixed, lower portions (52A) of the rotor shafts (52) are fitted into two bearings (B1) fixed to the case main body (20) with two lower shafts (70) being fitted into inner circumferential surfaces (52x) of the rotor shafts (52). In a cover assembly process for assembling a rear cover (30) to the case main body (20), two bearings (B2) fixed to the rear cover (30) are fitted into upper portions (52B) of the rotor shafts (52) with the lower shafts (70) being fitted into the inner circumferential surfaces (52x) of the rotor shafts (52). Central axes of the rotor shafts (52) are prevented from inclining, and the rear cover (30) can be easily assembled to the case main body (20) without having to form large chamfers on the two bearings (B2) and the two rotor shafts (52).

## Description

### TECHNICAL FIELD

The present invention relates to a method for manufacturing a double-axial parallel motor in which two motor generators are arranged in parallel in a case, and a cover assembly jig to be used to assemble a cover of the double-axial parallel motor. In particular, the present invention relates to a method for manufacturing a double-axial parallel motor and a cover assembly jig to prevent a central axis of a rotor shaft of each of the two motor generators from inclining.

### BACKGROUND ART

To enhance the mountability of a motor on a vehicle, recently, there is an attempt to mount a double-axial parallel motor on a hybrid vehicle and others. Herein, the double-axial parallel motor is configured so that two motor generators are housed in a case and rotor shafts of the motor generators are arranged in parallel. Such a double-axial parallel motor is disclosed in for example Patent Document 1 listed below.

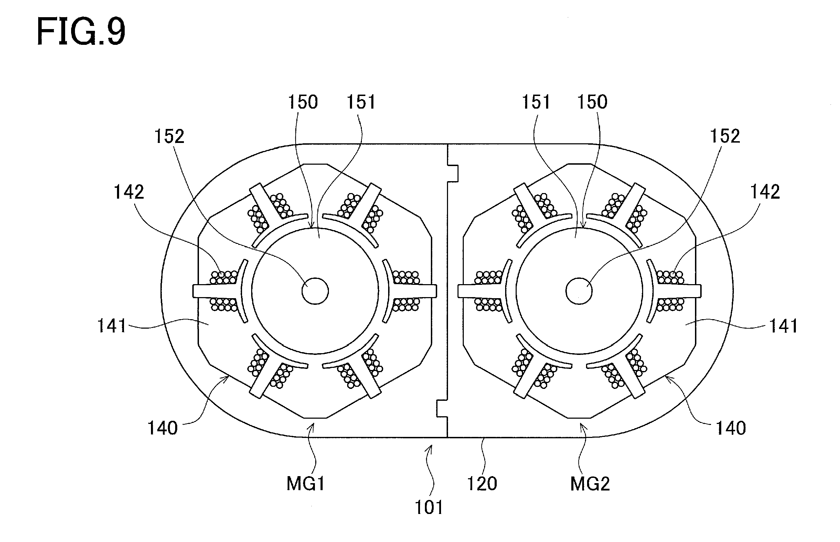

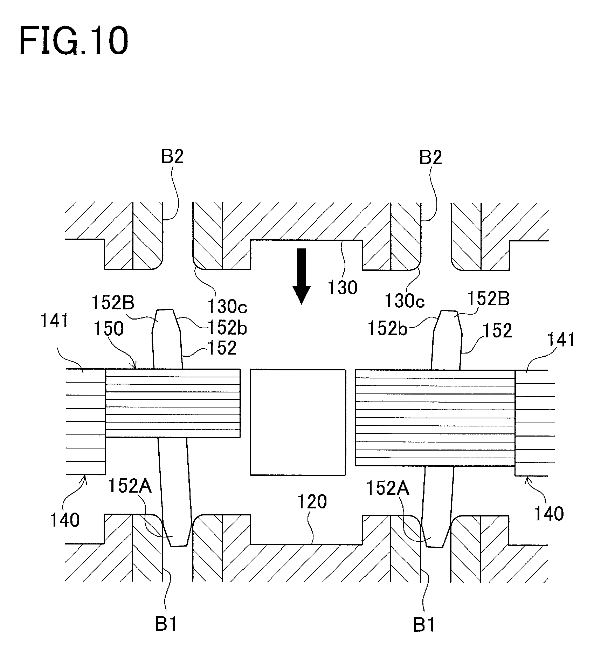

In the double-axial parallel motor disclosed in the Patent Document 1 listed below, as shown in FIG 9, stators 140 of motor generators MG1 and MG2 are fixed in a case body 120, and rotors 150 of the motor generators MG1 and MG2 are placed in respective stators 140. Each of the stators 140 consists of a stator core 141 and a coil 142. Each of the rotors 150 consists of a rotor core 151 and a rotor shaft 152. Further, a cover 130 (see FIG 10) is placed to cover the motor generators MG1 and MG2 housed in the case body 120.

In a case of manufacturing the above double-axial parallel motor 101, each stator 140 is first fixed in the case body 120. The rotors 150 are then placed, one each, in the stators 140. At that time, as shown in FIG 10, lower end portions 152A of the rotor shafts 152 are fitted, one each, in two bearing B1 fixed in the case body 120. Finally, while two bearings B2 fixed in the cover 130 are fitted on upper end portions 152B of the rotor shafts 152, the cover 130 is assembled to the case body 120. In the above way, the double-axial parallel motor 101 is produced.

### RELATED ART DOCUMENTS

### PATENT DOCUMENTS

Patent Document 1: JP 2001-128422 A

### SUMMARY OF INVENTION

### PROBLEMS TO BE SOLVED BY THE INVENTION

However, in the case of manufacturing the double-axial parallel motor 101 as described above, the following problems are caused. Specifically, since the rotors 150 are magnetized, when the rotors 150 are placed in the stators 140, the rotors 150 closely stick to the corresponding stators 140 as shown in FIG 10. Thus, the central axes of the two rotor shafts 152 are inclined or tilted. Since the rotor shafts 152 are inclined irregularly, their two central axes are hard to correct at the same time. This causes a problem that it is very difficult to fit the two bearings B2 fixed in the cover 130 onto the upper end portions 152B of the rotor shafts 152.

Therefore, the present applicant chamfered the upper end portion 152B of each rotor shaft 152 and also chamfered each bearing B2 fixed in the cover 130, as shown in FIG. 10, so that the two bearings B2 are fitted on the upper end portions 152B of the rotor shafts 152 by allowing a guide face 130c of each bearing B2 to be guided by a guide face 152b of each rotor shaft 152.

In the above fitting operation, however, the central axis of each of the two rotor shafts 152 is being inclined and thus it is necessary to greatly chamfer the upper end portion 152B of each rotor shaft 152 and the bearings B2. To ensure the length of each of the guide faces 152b and 130c in a depth direction (i.e. an up-and-down direction in FIG 10) and also ensure a fitting length by which the upper end portions 152B of the rotor shafts 152 are appropriately fitted in the corresponding bearings B2, the length of each rotor shaft 152 in the axial direction is increased. Thus, the length of the double-axial parallel motor 101 in the depth direction is also increased, resulting in deterioration in the mountability of the double-axial parallel motor 101 on a vehicle and an increase in cost loss of the double-axial parallel motor 101.

The present invention has been made to solve the above problems and has a purpose to provide a method for manufacturing a double-axial parallel motor and a cover assembly jig, capable of easily assembling a cover to a case body without greatly chamfering two rotor shafts and two bearings fixed in the cover.

### MEANS OF SOLVING THE PROBLEMS

(1) To achieve the above purpose, one aspect of the invention provides a method for manufacturing a double-axial parallel motor in which two motor generators each including a stator and a rotor are housed in a case body and a single cover, and rotor shafts of the rotors are arranged in parallel, the method including: a rotor assembling step of assembling the rotors to the case body in which the stators are fixed, by fitting first end portions of the rotor shafts in two bearings fixed in the case body while two fit shafts are fitted in inner peripheral surfaces of the rotor shafts; and a cover assembling step of assembling the cover to the case body by fitting two bearings fixed in the cover onto second end portions of the rotor shafts while the fit shafts are fitted in the inner peripheral surfaces of the rotor shafts.
(2) In the method for manufacturing a double-axial parallel motor in the above aspect of the present invention, preferably, each of the fit shafts includes a large-diameter portion, a small-diameter portion, and a shoulder between the large-diameter portion and the small-diameter portion, the fit shafts being placed, one each, coaxially with the rotor shafts and on a side of the first end portions of the rotor shafts, two engagement shafts are placed, one each, coaxially with the rotor shafts and on a side of the second end portions of the rotor shafts, and the rotor assembling step includes fitting the small-diameter portions of the fit shafts into the inner peripheral surfaces of the rotor shafts, engaging the shoulders of the fit shafts with the first end portions of the rotor shafts, and engaging the engagement shafts with the second end portions of the rotor shafts.
(3) A second aspect of the invention provides a cover assembly jig used to assemble a single cover to a case body in which two stators are fixed in parallel and rotors each including a rotor shaft are placed, one each, inside the stators, the jig including: two fit shafts each having a large-diameter portion, a small-diameter portion, and a shoulder between the large-diameter portion and the small-diameter portion, the fits shafts being placed, one each, coaxially with the rotor shafts and on a side of first end portions of the rotor shafts; and a fit shaft moving device configured to move the fit shafts in an axial direction of the rotor shafts, wherein the jig is configured so that, when two bearings fixed in the cover are fitted, one each, on the second end portions of the rotor shafts, the small-diameter portions of the fit shafts are fit into inner peripheral surfaces of the rotor shafts and the shoulders of the fit shafts are engaged with the first end portions of the rotor shafts.
(4) In the cover assembly jig in the above aspect of the invention, the small-diameter portion of each fit shaft may be attached thereon with an elastic member configured to be elastically deformed with respect to the inner peripheral surfaces of the rotor shafts.

### EFFECTS OF THE INVENTION

Operations and effects of the method for manufacturing a double-axial parallel motor according to the present invention will be explained below.

In the aforementioned manufacturing method (1), in the rotor assembling step, the fit shafts are fitted, one each, into the inner peripheral surfaces of the rotor shafts. Accordingly, it is possible to prevent the magnetized rotors to stick to the stators and thus avoiding the central axis of each rotor shaft from inclining. The first end portions of the rotor shafts can be therefore easily fitted into the bearings fixed in the case body. Specifically, each rotor can be easily assembled to the case body. In the cover assembling step, furthermore, the fit shafts are fitted into the inner peripheral surfaces of the rotor shafts. Thus, each rotor shaft is maintained in a state where its central axis is not inclined or tilted. This makes it easy to fit the two bearings fixed in the cover onto the second end portions of the rotor shafts. According to the present manufacturing method, consequently, the cover can be easily assembled to the case body without largely chamfering the two rotor shafts and the two bearings fixed in the cover.

In the above manufacturing method (2), in the rotor assembling step, the shoulders of the fit shafts are engaged with the first end portions of the rotor shafts, and the engagement shafts are engaged with the second end portions of the rotor shafts, respectively. Since each rotor shaft is held or clamped as above, respective central axis positions of the rotor shafts can be aligned with predetermined precise positions. Furthermore, the small-diameter portions of the fit shafts are fitted, one each, into the inner peripheral surfaces of the rotor shafts and also the shoulders of the fit shafts are engaged, one each, with the first end portions of the rotor shafts, thereby preventing the central axis of each rotor shaft from inclining. Thus, aligning of the central axis position of each rotor shaft and preventing of the central axis of each rotor shaft from inclining are both enabled.

Operations and effects of the above cover assembly jig will be explained.

In the above configuration (3), when the cover is to be assembled to the case body, the small-diameter portions of the fit shafts are fitted, one each, into the inner peripheral surfaces of the rotor shafts. The central axis of each rotor shaft can thus be prevented from inclining. Furthermore, the shoulders of the fit shafts are engaged, one each, with the first end portions of the rotor shafts, so that the position of each rotor shaft in the axial direction can be defined. In this way, the bearings fixed in the cover can be easily fitted onto the second end portions of the rotor shafts. Accordingly, by using this cover assembly jig, the cover can be easily assembled to the case body without forming large chamfers in the two rotor shafts and the two bearings fixed to the cover.

In the above configuration (4), while the elastic members attached to the small-diameter portions of the fit shafts are elastically deformed with respect to the inner peripheral surfaces of the rotor shafts, the fit shafts and the rotor shafts are fitted. Thus, the elastic members can fill a slight gap generated between the small-diameter portions of the fit shafts and the inner peripheral surfaces of the rotor shafts, thereby preventing even slight inclination of the central axis of each rotor shaft.

### BRIEF DESCRIPTION OF THE DRAWINGS

FIG 1 is a vertical sectional view schematically showing a double-axial parallel motor;
FIG 2 is a cross sectional view taken along a line X-X in FIG 1;
FIG 3 is a diagram showing a state in which a stator is mounted in a case body;
FIG 4 is a diagram showing a state in which rotor shafts are held between a lower shaft and an upper shaft;
FIG 5 is a diagram showing a state in which lower end portions of the rotor shafts are fitted in bearings fixed in the case body;
FIG 6 is a diagram showing a state in which a rear cover is moved toward the case body;
FIG 7 is a diagram showing a state in which bearings fixed in the rear cover are fitted on upper end portions of the rotor shafts;
FIG 8 is a diagram showing a state in which a lower shaft is fitted in an inner peripheral surface of a rotor shaft in a modified example;
FIG 9 is a plane view schematically showing a conventional double-axial parallel motor; and
FIG 10 is a diagram showing a state in which central axes of rotor shafts are inclined in a conventional art.

### MODE FOR CARRYING OUT THE INVENTION

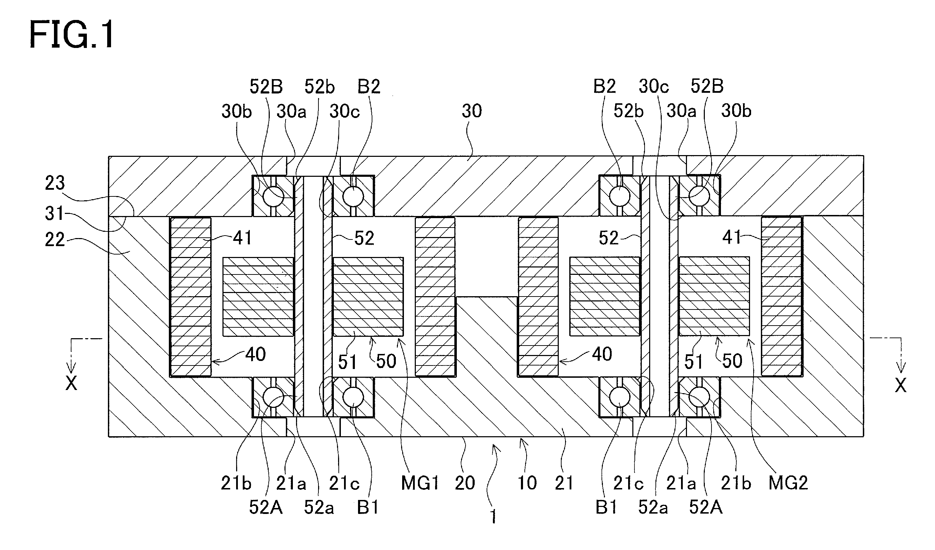

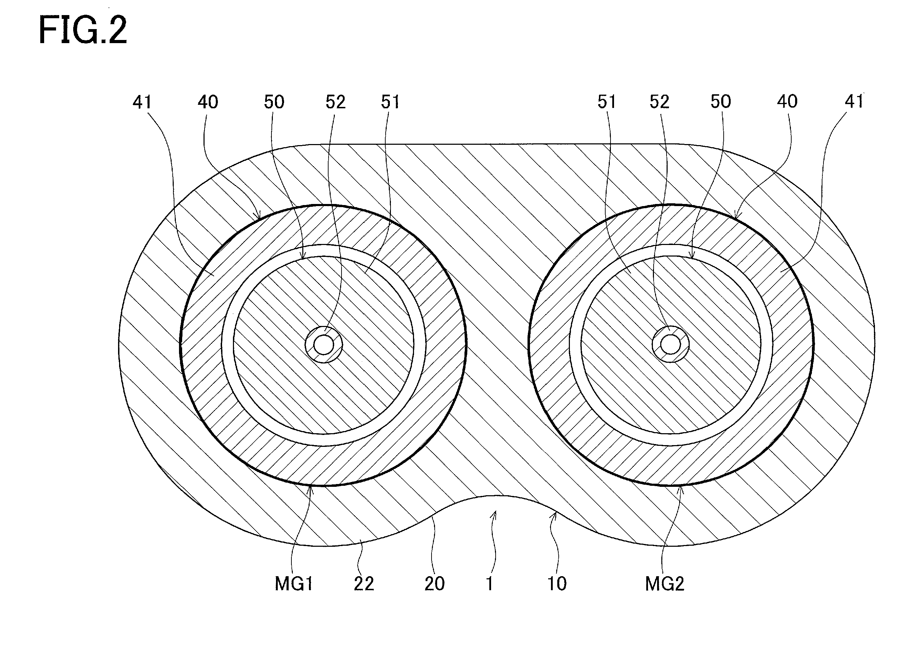

A detailed description of a preferred embodiment of a method for manufacturing a double-axial parallel motor and a cover assembly jig of the present invention will now be given referring to the accompanying drawings. FIG 1 is a vertical sectional view schematically showing a double-axial parallel motor 1. FIG 2 is a cross sectional view taken along a line X-X in FIG 1. As shown in FIGs. 1 and 2, the double-axial parallel motor 1 includes a transaxle case 10 and two motor generators MG1 and MG2 housed in the transaxle case 10.

The transaxle case 10 includes, as shown in FIG 1, a case body 20 opening at its upper end and a rear cover 30 covering the case body 20. This transaxle case 10 is made of a metal material such as aluminum, aluminum alloy, and so on by molding.

The case body 20 has a bottom wall 21 and a peripheral wall 22 as shown in FIG 1. The bottom wall 21 is formed with two through holes 21 a and two stepped holes 21b so that the through holes 21a are continuous to the corresponding stepped holes 21b. In each of the stepped holes 21b, a bearing B 1 is fixed. The bearings B 1 support lower end portions 52A of rotor shafts 52 mentioned later in a rotatable state. Each bearing B 1 is formed, at an upper end of an inner peripheral side, with a guide face 21 c by chamfering.

The rear cover 30 has an outer shape like nearly "8" in plan view. An edge portion 31 of this rear cover 30 is joined to an open end 23 of the case body 20 coated with FIPG (liquid gasket). Thus, a lubricant is sealed in the transaxle case 10. The rear cover 30 is formed with two through holes 30a and two stepped holes 30b so that the through holes 30a are continuous to the corresponding stepped holes 30b. In each of the stepped holes 30b, a bearing B2 is fixed. The bearings B2 support upper end portions 52B of the rotor shafts 52 mentioned later in a rotatable state. Each bearing B2 is formed, at a lower end of an inner peripheral side, with a guide face 30c by chamfering.

The motor generators MG1 and MG2 each function as an electric motor that is driven by supply of electric power and a power generator for converting mechanical energy to electric energy. The motor generator MG1 mainly acts as the power generator. On the other hand, the motor generator MG2 mainly acts as the electric motor. Since the motor generator MG1 and the motor generator MG2 are identical in configuration to each other, only the motor generator MG1 is explained below without repeating the explanation of the motor generator MG2.

The motor generator MG1 includes a stator 40 and a rotor 50 as shown in FIGs. 1 and 2. The stator 40 has a stator core 41 and coils not shown wound on the stator core 41. The stator core 41 is made of a plurality of nearly-circular disk-shaped electromagnetic steel plates laminated in a thickness direction. The stator core 41 has an outer diameter of about 170 to 215 mm. The stator 40 is placed inside the peripheral wall 22 of the case body 20 and fixed to the case body 20.

The rotor 50 is placed inside the stator 40 and includes a rotor core 51 and a rotor shaft 52. The rotor core 51 is made of a plurality of circular disk-shaped electromagnetic steel plates laminated in a thickness direction. The rotor core 51 has an outer diameter of about 100 to 120 mm. Between the rotor core 51 and the stator core 41, a clearance is generated to prevent the rotor 50 from contacting with the stator 40. The rotor shaft 52 has a hollow cylindrical shape extending in a depth direction (i.e. an up-and-down, or vertical, direction in FIG 1) of the case body 20. The rotor shaft 52 is press-fitted in a central hole of the rotor core 51. This rotor shaft 52 is about 150 mm in length in an axial direction, about 34 mm in outer diameter, and about 23 mm in inner diameter.

The lower end portion 52A of the rotor shaft 52 is fitted in the bearing B 1 fixed in the case body 20. This lower end portion 52A of the rotor shaft 52 corresponds to a first end portion of a rotor shaft of the invention. The lower end portion 52A of the rotor shaft 52 is formed with a guide face 52a by chamfering. This guide face 52a enables easy fitting between the lower end portion 52A of the rotor shaft 52 and the bearing B 1 by engaging the guide face 21c of the bearing B1 when the lower end portion 52A of the rotor shaft 52 is fitted into the bearing B1. The guide face 52a and the guide face 21c are formed with a chamfer size (a size in the vertical direction in FIG 1) set to be sufficiently smaller than 1 mm. In FIG 1, the guide face 52a and the guide face 21c are illustrated with an exaggerated size.

The upper end portion 52B of the rotor shaft 52 is fitted in the bearing B2 fixed in the rear cover 30. The upper end portion 52B of the rotor shaft 52 corresponds to a second end portion of the rotor shaft of the invention. The upper end portion 52B of the rotor shaft 52 is formed with a guide face 52b by chamfering. This guide face 52b enables easy fitting between the bearing B2 and the upper end portion 52B of the rotor shaft 52 by engaging the guide face 30c of the bearing B2 when the bearing B2 is fitted onto the upper end portion 52B of the rotor shaft 52. The guide face 52b and the guide face 30c are formed with a chamfer size (the size in the vertical direction in FIG 1) set to be sufficiently smaller than 1 mm. In FIG 1, the guide face 52b and the guide face 30c are illustrated with an exaggerated size. In the conventional art, the guide face 52b and the guide face 30c are formed with a chamfer size of about 1.15 mm.

In the double-axial parallel motor 1, as above, the two motor generators MG1 and MG2 are housed in the single transaxle case 10, and the rotor shafts 52 of the motor generators MG1 and MG2 are arranged in parallel. When electric current is supplied to the coils of the stators 40, the rotors 50 are rotated about the central axes of the rotor shafts 52.

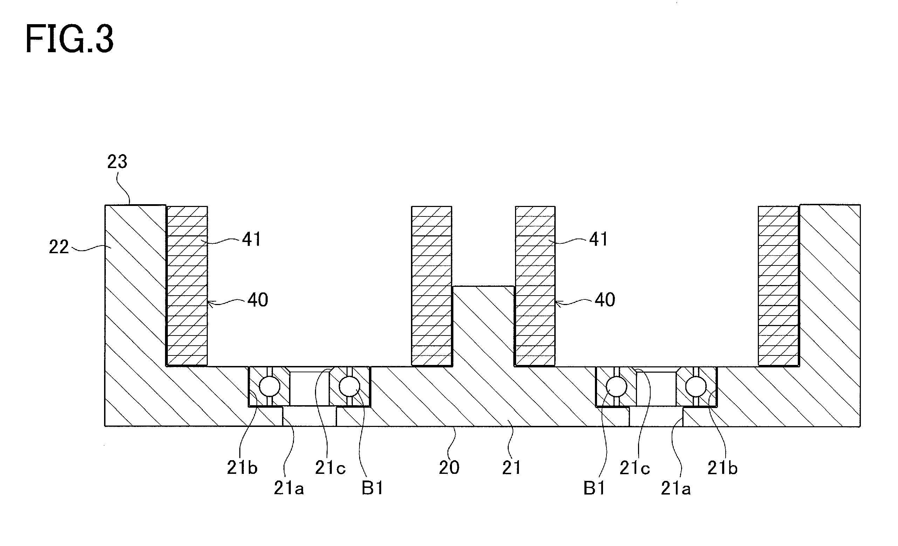

The method for manufacturing the double-axial parallel motor will be explained below with reference to FIGs. 3 to 7. In this manufacturing method, the stators 40, 40 and the rotors 50, 50 of the two motor generators MG1, MG2 are assembled to the case body 20. However, for convenience of explanation, the stator 40, 40 and the rotors 50, 50 are explained with respective single signs as the stator(s) 40 and the rotor(s) 50. Further, other pairs of members and portions are also explained with single signs.

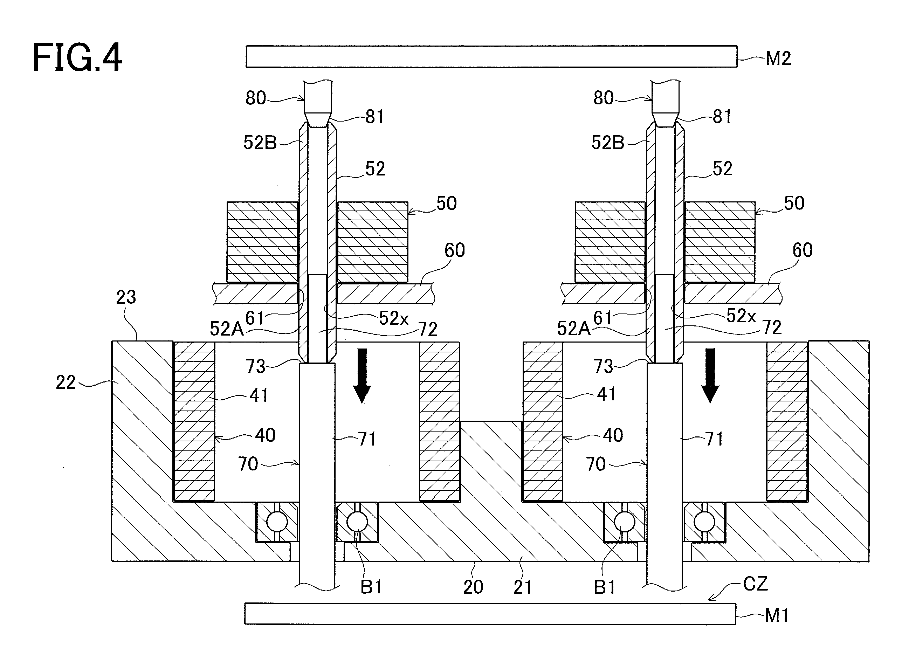

As shown in FIG 3, prior to assembling the rotors 50 to the case body 20, the stators 40 are fixed in the case body 20. Then, FIPG is applied to the open end 23 of the case body 20. Thereafter, while the magnetized rotors 40 are supported by rotor support jigs 60, as shown in FIG 4, lower shafts 70 and upper shafts 80 hold therebetween the rotor shafts 52. Hereinafter, the rotor support jigs 60, the lower shafts 70, and the upper shafts 80 will be explained in detail.

The rotor support jigs 60 are used to temporarily support the rotors 50. As shown in FIG 4, each of the rotor support jigs 60 is formed in a flat plate-like shape and with a slit 61 in a U-shape in plan view. The rotor support jigs 60 support the rotors 50 while the rotor shafts 52 are inserted through the slits 61. After the rotor shafts 52 are clamped as above, the rotor support jigs 60 are moved to positions not to support the rotors 50.

Each of the lower shafts 70 extends coaxially with the corresponding rotor shaft 52 and is placed on a side of the lower end portion 52A of the rotor shaft 52 (a lower side in FIG 4). Each lower shaft 70 has a large-diameter portion 71 on a lower part and a small-diameter portion 72 on an upper part, and a shoulder 73 between the large-diameter portion 71 and the small-diameter portion 72. The diameter of the large-diameter portion 71 is smaller than the inner diameter of the bearing B1 and larger than the inner diameter (23 mm) of the rotor shaft 52. The diameter of the small-diameter portion 72 is slightly smaller than the inner diameter of the rotor shaft 52.

The lower shafts 70 are movable in the axial direction of the rotor shafts 52 by a lower servo mechanism M1. In other words, the lower servo mechanism M1 is configured to move the lower shafts 70 in the axial direction of the rotor shafts 52. The lower shafts 70 of the present embodiment correspond to a fit shaft of the invention and the lower servo mechanism M1 of the present embodiment corresponds to a fit shaft moving device of the invention. A cover assembly jig CZ includes the lower shafts 70 and the lower servo mechanism M1.

On the other hand, each of the upper shafts 80 extends coaxially with the rotor shafts 52 and is placed on a side of the upper end portion 52B of the rotor shaft 52 (an upper side in FIG 4). Each upper shaft 80 has a tapered portion 81 on a lower part. The upper shafts 80 are movable in the axial direction of the rotor shafts 52 by an upper servo mechanism M2. The upper shafts 80 of the present embodiment correspond to an engagement shaft of the invention. The above lower shafts 70 and upper shafts 80 are operated in the following manner.

After the stators 40 are fixed to the case body 20, the lower shafts 70 are moved upward in FIG 4 by passing through the through holes 21a of the case body 20 so that the small-diameter portions 72 are inserted in the rotor shafts 52. The shoulders 73 engage with the lower end portions 52A of the rotor shafts 52 as shown in FIG 4 and the small-diameter portions 72 are fitted in the inner peripheral surfaces 52x of the rotor shafts 52 by about 60 mm. On the other hand, the upper shafts 80 are moved downward in FIG 4 so that the tapered portions 81 are engaged with the upper end portions 52B of the rotor shafts 52.

In the state shown in FIG 4, the lower shafts 70 are pushed up by an upward force of 2 kN for example by the lower servo mechanism M1. On the other hand, the upper shafts 80 are pushed down by a downward force of 5 kN for example by the upper servo mechanism M2. Accordingly, the rotor shafts 52 are moved downward in FIG 4 while respective central axis positions are aligned with predetermined precise positions by the lower shafts 70 and the upper shafts 80.

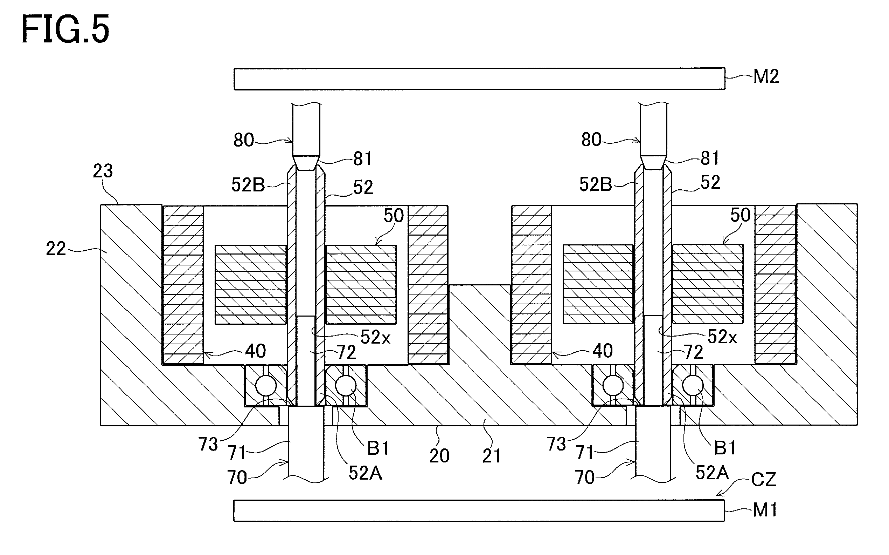

Herein, the explanation is returned to the method for manufacturing the double-axial parallel motor. After the rotor support jigs 60 are moved to the positions not to support the rotors 50, the rotor shafts 52 are moved downward in FIG 5 while the rotor shafts 52 are held or clamped between the lower shafts 70 and the upper shafts 80 as shown in FIG 5. Then, the lower end portions 52A of the rotor shafts 52 are fitted in the bearings B 1 (a rotor assembling step in the invention). Subsequently, the upper shafts 80 are moved upward in FIG 5, releasing the rotor shafts 52 from the clamped state. At that time, the magnetized rotors 50 are apt to stick to the stators 40, and thus the central axes of the rotor shafts 52 are tilted or inclined. However, since the small-diameter portions 72 of the lower shafts 70 are fitted in the inner peripheral surfaces 52x of the rotor shafts 52, the central axes of the rotor shafts 52 are prevented from inclining. Even when the upper shafts 80 are moved upward in FIG 5, therefore, the rotor shafts 52 are maintained with respective central axis positions being aligned with the predetermined precise positions.

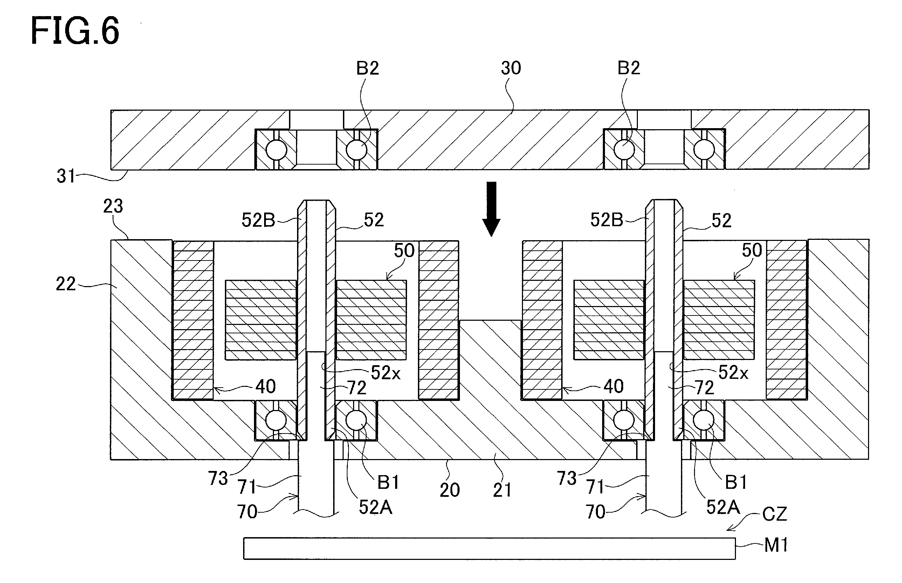

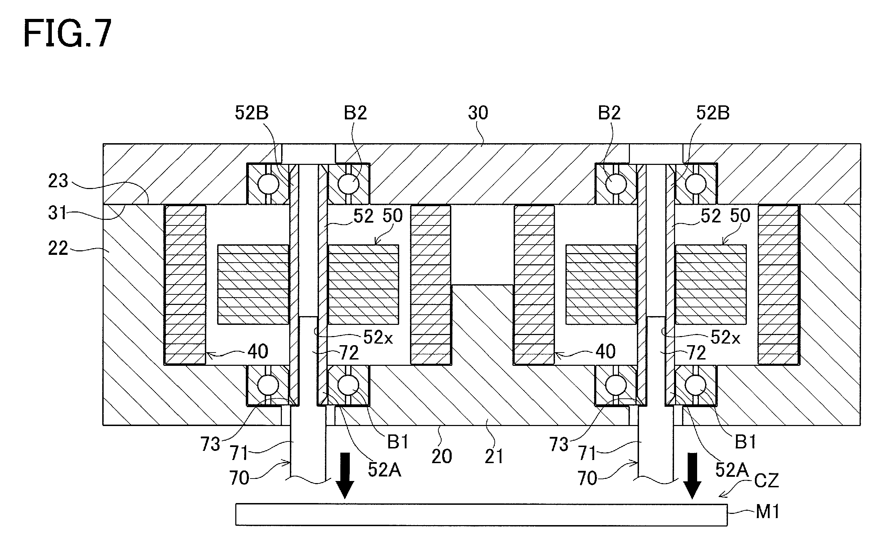

After the upper shafts 80 are moved upward in FIG 5, an assembling mechanism not shown moves the rear cover 30 downward in FIG 6, as shown in FIG 6. At that time, as described above, the central axis of each rotor shaft 52 is not inclined and the central axis position of each rotor shaft 52 is aligned with the predetermined precise position. Thus, as shown in FIG 7, the bearings B2 fixed in the rear cover 30 are easily fitted on the upper end portions 52B of the rotor shafts 52 (a cover assembling step in the invention). The lower shafts 70 are then moved downward in FIG 7, thereby releasing fitting between the small-diameter portions 72 and the inner peripheral surfaces 52x of the rotor shafts 52. The rear cover 30 is assembled to the case body 20 in the above manner and the double-axial parallel motor 1 is thus produced.

Operations and effects of the method for manufacturing the double-axial parallel motor in the present embodiment will be explained. In the rotor assembling step, as shown in FIGs. 4 and 5, the small-diameter portion 72 of each lower shaft 70 is fitted in the inner peripheral surface 52x of each rotor shaft 52. This makes it possible to prevent the magnetized rotors 50 from sticking to the stators 40 and thereby avoid the central axis of each rotor shaft 52 from inclining. Consequently, the lower end portions 52A of the rotor shafts 52 are allowed to easily fit, one each, in the bearings B1 fixed in the case body 20. Specifically, each rotor 50 can be easily assembled to the case body 20.

Furthermore, even in the cover assembling step, as shown in FIGs. 6 and 7, the small-diameter portions 72 of the lower shafts 70 are fitted, one each, in the inner peripheral surfaces 52x of the rotor shafts 52. Accordingly, the rotor shafts 52 are maintained with respective central axes being not inclined. This allows the two bearings B2 fixed in the rear cover 30 to be easily fitted on the upper end portions 52B of the rotor shafts 52. The above manufacturing method therefore enables easy assembling of the rear cover 30 to the case body 20 without largely chamfering the two rotor shafts 52 and the two bearings B2 fixed in the rear cover 30.

Since there is no need to form a chamfer of about 1.15 mm in the upper end portion of each rotor shaft as in the conventional art, the length of each rotor shaft 52 in the axial direction can be shortened. This results in a decreased in length of the double-axial parallel motor 1 in the depth direction (the vertical direction in FIG 1) as compared with the conventional art. This configuration can improve the mountability of the double-axial parallel motor 1 on a vehicle and prevent cost loss of the double-axial parallel motor 1.

According to the above manufacturing method, as shown in FIG. 4, the shoulder 73 of each lower shaft 70 engages with the lower end portion 52A of each rotor shaft 52 and the tapered portion 81 of each upper shaft 80 engages with the upper end portion 52B of each rotor shaft 52, thereby holding or clamping the rotor shafts 52. Accordingly, respective central axis positions of the rotor shafts 52 can be aligned with the predetermined precise positions. Since the small-diameter portion 72 of each lower shaft 70 is fitted in the inner peripheral surface 52x of each rotor shaft 52 and the shoulder 73 of each lower shaft 70 is engaged with the lower end portion 52A of each rotor shaft 52, the central axis of each rotor shaft 52 is prevented from inclining. Thus, aligning of the central axis position of each rotor shaft 52 and preventing of the central axis of each rotor shaft 52 from inclining are both enabled.

Operations and effects of the cover assembly jig CZ in the present embodiment will be explained below. According to the cover assembly jig CZ, when the rear cover 30 is being assembled to the case body 20, the small-diameter portions 72 of the lower shafts 70 are fitted in the inner peripheral surfaces 52x of the rotor shafts 52, so that the central axis of each rotor shaft 52 can be prevented from inclining. Since the shoulders 73 of the lower shafts 70 are engaged with the lower end portions 52A of the rotor shafts 52, furthermore, the position of each rotor shaft 52 in the axial direction can be defined. In this manner, the bearings B2 fixed in the rear cover 30 can be easily fitted on the upper end portions 52B of the rotor shafts 52. By using this cover assembly jig CZ, the rear cover 30 can be easily assembled to the case body 20 without largely chamfering the two rotor shafts 52 and the two bearings B2.

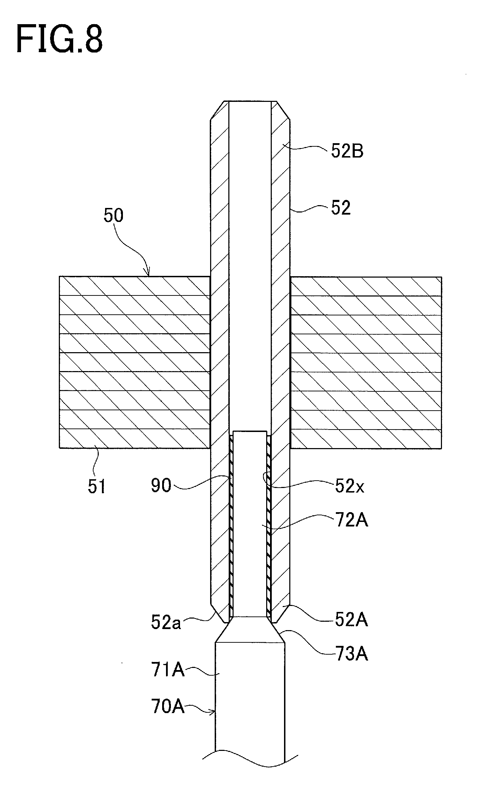

A modified example of the present embodiment will be explained referring to FIG 8. FIG 8 is a diagram showing a state in which a lower shaft 70A in the modified example is fitted in a rotor shaft 52. This lower shaft 70A includes, as shown in FIG 8, a large-diameter portion 71A and a small-diameter portion 72A and further a tapered portion 73A between the large-diameter portion 71a and the small-diameter portion 72A. The small-diameter portion 72A is attached thereon with an elastic member 90 configured to be elastically deformed with respect to the inner peripheral surface 52x of the rotor shaft 52. This elastic member 90 is formed of a very thin cylindrical shape and made of e.g. soft resin, rubber, or the like. The tapered portion 73A is engaged with the lower end portion 52A of the rotor shaft 52. This tapered portion 73A corresponds to a shoulder of the invention. Other configurations of the modified example are similar or identical to those in the aforementioned embodiment and thus their explanations are omitted.

Operations and effects of the modified example will be explained. In this modified example, as shown in FIG 8, while the elastic member 90 mounted on the small-diameter portion 72A of the lower shaft 70 is elastically deformed with respect to the inner peripheral surface 52x of the rotor shaft 52, the lower shaft 70A is fitted in the rotor shaft 52. Accordingly, the elastic member 90 can fill a slight gap generated between the small-diameter portion 72A of the lower shaft 70A and the inner peripheral surface 52x of the rotor shaft 52, thereby preventing even slight inclination of the central axis of the rotor shaft 52. Other operations and effects of the modified example are similar or identical to those in the aforementioned embodiment and their explanations are omitted.

The above explanations are given to the manufacturing method of the double-axial parallel motor and the cover assembly jig according to the invention. However, the invention is not limited thereto and may be embodied in other specific forms without departing from the essential characteristics thereof. For instance, although the stator 40 and the rotor 50 of the motor generator MG1 are respectively equal in shape and size to the stator 40 and the rotor 50 of the motor generator MG2, the shape and the size may be set different between the motor generators MG1 and MG2. In FIG 1, each of the case body 20 and the rear cover 30 has a symmetric shape but may have an asymmetric shape. Furthermore, the shapes and the sizes of the case body 20, the rear cover 30, each stator 40, each rotor 50, each lower shaft 70, and each upper shaft 80 may be modified appropriately. For example, the lower end portion 52A and the upper end portion 52B of each rotor shaft 52 are formed with chamfers (the guide faces 52a and 52b) on respective outer peripheral portions. The lower end portion 52A and the upper end portion 52B of each rotor shaft 52 may also be formed with chamfers on respective inner peripheral portions. Moreover, a distal end of the small-diameter portion 72 of each lower shaft 70 may be chamfered. Furthermore, a distal end of the tapered portion 81 of each upper shaft 80 may be chamfered.

### REFERENCE SIGNS LIST

- 1: Double-axial parallel motor
- 10: Transaxle case
- 20: Case body
- 30: Rear cover
- 40: Stator
- 50: Rotor
- 52: Rotor shaft
- 52x: Inner peripheral surface
- 52A: Lower end portion
- 52B: Upper end portion
- 60: Rotor support jig
- 70: Lower shaft
- 71: Large-diameter portion
- 72: Small-diameter portion
- 73: Shoulder
- 80: Upper shaft
- 81: Tapered portion
- M1, M2: Lower servo mechanism, Upper servo mechanism
- MG1, MG2: Motor generator
- CZ: Cover assembly jig

## Claims

1. A method for manufacturing a double-axial parallel motor in which two motor generators each including a stator and a rotor are housed in a case body and a single cover, and rotor shafts of the rotors are arranged in parallel, the method including:
a rotor assembling step of assembling the rotors to the case body in which the stators are fixed, by fitting first end portions of the rotor shafts in two bearings fixed in the case body while two fit shafts are fitted in inner peripheral surfaces of the rotor shafts; and
a cover assembling step of assembling the cover to the case body by fitting two bearings fixed in the cover onto second end portions of the rotor shafts while the fit shafts are fitted in the inner peripheral surfaces of the rotor shafts.

2. The method for manufacturing a double-axial parallel motor according to claim 1, wherein
each of the fit shafts includes a large-diameter portion, a small-diameter portion, and a shoulder between the large-diameter portion and the small-diameter portion, the fit shafts being placed, one each, coaxially with the rotor shafts and on a side of the first end portions of the rotor shafts,
two engagement shafts are placed, one each, coaxially with the rotor shafts and on a side of the second end portions of the rotor shafts, and
the rotor assembling step includes fitting the small-diameter portions of the fit shafts into the inner peripheral surfaces of the rotor shafts, engaging the shoulders of the fit shafts with the first end portions of the rotor shafts, and engaging the engagement shafts with the second end portions of the rotor shafts.

3. A cover assembly jig used to assemble a single cover to a case body in which two stators are fixed in parallel and rotors each including a rotor shaft are placed, one each, inside the stators, the jig including:
two fit shafts each having a large-diameter portion, a small-diameter portion, and a shoulder between the large-diameter portion and the small-diameter portion, the fits shafts being placed, one each, coaxially with the rotor shafts and on a side of first end portions of the rotor shafts; and
a fit shaft moving device configured to move the fit shafts in an axial direction of the rotor shafts,
wherein the jig is configured so that, when two bearings fixed in the cover are fitted, one each, on the second end portions of the rotor shafts, the small-diameter portions of the fit shafts are fit into inner peripheral surfaces of the rotor shafts and the shoulders of the fit shafts are engaged with the first end portions of the rotor shafts.

4. The cover assembly jig according to claim 3, wherein the small-diameter portion of each fit shaft is attached thereon with an elastic member configured to be elastically deformed with respect to the inner peripheral surfaces of the rotor shafts.
